# EUROPÄISCHE PATENTSCHRIFT

(11) **EP 3 112 238 B1**
(45) Veröffentlichungstag und Bekanntmachung des Hinweises auf die Patenterteilung: **07.08.2019**
(21) Anmeldenummer: 16176816.3
(22) Anmeldetag: 29.06.2016
(51) Int. Cl.: B62J 6/18

(54) **LEITUNGS-FIXIERELEMENT FÜR IN FAHRRADRAHMENROHREN ANGEORDNETE LEITUNGEN, FAHRRADRAHMENROHR SOWIE VERFAHREN ZUR ANORDNUNG UND FIXIERUNG EINER LEITUNG IN EINEM FAHRRADRAHMENROHR**
CABLE FIXING ELEMENT FOR CABLES ARRANGED IN BICYCLE FRAME TUBES, BICYCLE FRAME TUBE AND A METHOD OF MOUNTING AND SECURING A CABLE IN A BICYCLE FRAME TUBE
ÉLEMENT DE FIXATION DE CONDUITE POUR DES CONDUITES DISPOSEES DANS LES TUBES DE CADRE DE BICYCLETTE ET PROCEDE DE POSE ET DE FIXATION D'UNE CONDUITE DANS UN TUBE DE CADRE DE BICYCLETTE

(30) Priorität: 02.07.2015 DE 102015212446
(43) Veröffentlichungstag der Anmeldung: 04.01.2017
(73) Patentinhaber: Canyon Bicycles GmbH, 56073 Koblenz (DE)
(72) Erfinder: Adomeit, Michael, 56068 Koblenz (DE)
(74) Vertreter: dompatent von Kreisler Selting Werner - Partnerschaft von Patent- und Rechtsanwälten mbB

(56) Entgegenhaltungen:
- EP-A1- 0 702 444
- EP-A2- 2 159 140
- US-A- 3 823 254
- Anonymous: "100x Kabelbinder Befestigung 100 Stück Für Kabelbaum & Drähte (Max Breite 9mm) - KOSTENLOSER VERSAND!: Amazon.de: Baumarkt", , 13 March 2012 (2012-03-13), XP055490863, Retrieved from the Internet: URL:https://www.amazon.de/dp/B007JVWFWY/re f=psdc_2076362031_t3_B007JVWF38 [retrieved on 2018-07-06]

## Beschreibung

Die Erfindung betrifft ein Leitungs-Fixierelement für in Fahrradrahmenrohren angeordnete Leitungen, ein Fahrradrahmenrohr sowie ein Verfahren zur Anordnung und Fixierung einer Leitung in einem Fahrradrahmenrohr.

Bei modernen Fahrrädern werden Leitungen, wie Hydraulikleitungen, elektrische Leitungen und Bowdenzüge häufig innerhalb von Rahmenrohren verlegt. Hierbei besteht die Problematik, dass Klappergeräusche auftreten können. Dies ist insbesondere bei Leitungen mit hohem Eigengewicht, wie Hydraulikleitungen der Fall, die im Unterschied zu Bowdenzügen ferner keine Vorspannung aufweisen. Diese Klappergeräusche sind insbesondere bei dünnwandigen Rohren und Rohren aus CFK nachteilig, da entsprechende Rohre zusätzlich als Resonanzkörper wirken.

Um derartige Klappergeräusche zu vermeiden, ist das Umgeben der Leitungen mit Schaumstoff bekannt. Hierbei handelt es sich jedoch um ein äußerst aufwendiges Montageverfahren. Ferner kann hierdurch eine Behinderung der mechanischen Züge auftreten. Bei Fahrradrahmen aus Aluminium ist es bekannt, durchgehend angeschweißte Führungsrohre innerhalb des Rahmens vorzusehen. Dies ist einerseits nur bei Aluminiumrahmen möglich und weist den Nachteil auf, dass hierdurch das Gewicht erhöht wird und die Herstellung teuer ist.

Eine weitere Möglichkeit besteht im Vorsehen von mit den Leitungen verbundenen Kunststoffklips, die auf die Leitung aufgefädelt werden und eine Art Verklemmen oder Verblocken der Leitung im Rohr bewirken. Hierbei handelt es sich um ein äußerst aufwendiges Vorgehen, das ferner im Handling schwierig ist. Auch hierdurch kann wiederum ein Behindern von mechanischen Zügen erfolgen.

Insbesondere für mechanische Züge wie Bowdenzüge ist es aus EP 2 159 149 bekannt, die Bowdenzüge innerhalb des Rahmenrohrs derart zu verlegen, dass sich zwei Bowdenzüge kreuzen. Hierdurch ist die Gefahr des Schwingens der Züge und somit ein Anschlagen der Züge an der Innenseite des Rahmenrohrs verringert. Das Kreuzen von Leitungen führt allerdings nur bei Bowdenzügen, die eine Vorspannung aufweisen, zu befriedigenden Ergebnissen.

Ein von Amazon vertriebener Kabelbinder mit Sockel zur Befestigung von Kabelbäumen wird als der nächste Stand der Technik betrachet.

Aufgabe der Erfindung ist es daher, ein Leitungs-Fixierelement für im Fahrradrahmen angeordnete Leitungen zu schaffen, durch das ein einfaches Fixieren der Leitungen innerhalb des Fahrradrahmenrohrs möglich ist. Ferner ist es Aufgabe der Erfindung ein entsprechendes Verfahren zur Anordnung und Fixierung mindestens einer Leitung in einem Fahrradrohr zu schaffen.

Die Lösung der Aufgabe erfolgt erfindungsgemäß durch ein Leitungs-Fixierelement gemäß Anspruch 1 ein Fahrradrahmenrohr mit Fixierelement nach Anspruch 7 sowie ein Verfahren gemäß Anspruch 7.

Das erfindungsgemäße Leitungs-Fixierelement für in Fahrradrahmenrohren angeordnete Leitungen weist ein Schlaufenelement auf. Das Schlaufenelement ist derart ausgebildet, dass seine Öffnungsweite veränderbar ist. Die Schlaufe kann somit insbesondere zugezogen werden. Mit dem Schlaufenelement ist ein das Schlaufenelement haltendes Halteelement verbunden. Mit Hilfe des Halteelements ist das Leitungs-Fixierelement an einem Fahrradrohr befestigbar. Die Befestigung erfolgt derart, dass das Schlaufenelement innerhalb des Fahrradrahmenrohrs angeordnet ist. Zu fixierende Leitungen werden somit bei der Montage durch das Schlaufenelement hindurch geführt. Durch Verringern der Öffnungsweite des Schlaufenelements, das heißt vorzugsweise durch Zuziehen der Schlaufe, erfolgt ein Fixieren der entsprechenden Leitungen innerhalb des Fahrradrahmenrohrs. Das erfindungsgemäße Leitungs-Fixierelement weist insbesondere den Vorteil auf, dass es sehr leicht ist, und auch die Handhabbarkeit einfach ist, da lediglich ein Verringern der Öffnungsweite des Schlaufenelements erforderlich ist, um ein Fixieren der Leitungen im Fahrradrahmenrohr zu bewirken. Auch ist es möglich, dass beispielsweise mechanische Züge innerhalb des Fahrradrahmenrohrs nicht fixiert werden, so dass durch das erfindungsgemäße Leitungs-Fixierelement die übrigen Leitungen fixiert werden und eine Behinderung der mechanischen Leitungen wie der Bowdenzüge nicht mehr erfolgt. Möglich ist es auch, die mechanischen Leitungen gesondert an anderer Stelle im Rahmenrohr zu fixieren, so dass eine Beeinträchtigung der unterschiedlichen Leitungen untereinander nicht erfolgt. Im Übrigen ist das erfindungsgemäße Leitungsfixierelement sehr kostengünstig herstellbar und auch die Montage ist einfach und damit kostengünstig.

In einer bevorzugten Weiterbildung der Erfindung ist das Schlaufenelement in einer Fixierposition, das heißt in der Position, in der die Leitungen fixiert sind, arretierbar. Hierdurch ist ein dauerhaftes Halten der Leitungen in der entsprechenden Position gewährleistet. Eine Arretierung kann durch ein entsprechendes Verschlusselement wie einen Klemmhebel, der beispielsweise ein freies Ende des Schlaufenelements fixiert oder dergleichen realisiert werden.

Besonders bevorzugt ist es, dass das Schlaufenelement einen Haltekopf mit einer Öffnung aufweist, durch die ein Bandelement des Schlaufenelements geführt ist. Hierbei ist es zur Arretierung in der Fixierposition bevorzugt, dass in der Öffnung des Haltekopfs ein entsprechendes Arretierelement angeordnet ist. Beispielsweise kann zur Verringerung der Öffnungsweite des Schlaufenelements das Bandelement durch die Öffnung hindurch gezogen werden und anschließend ein Verklemmen des Bandelements in der Öffnung erfolgen. Dies kann beispielsweise durch einen Klemmhebel, das Einführen eines Klemmkeils oder dergleichen erfolgen. Besonderes bevorzugt ist es, zur Arretierung ein Rastelement vorzusehen, das insbesondere im Haltekopf, das heißt besonders bevorzugt in der Öffnung des Haltekopfs vorgesehen ist. Dieses Rastelement wirkt vorzugsweise mit einem am Bandelement vorgesehenen Rastelement zusammen.

Besonders bevorzugt ist es, das Schlaufenelement entsprechend eines Kabelbinders auszubilden bzw. einen Kabelbinder als Schlaufenelement vorzusehen. Das Bandelement dieses Schlaufenelements weist entsprechende Rastverbindungen auf. Ferner weist der Kabelbinder einen Haltekopf auf, durch den das Bandelement hindurchgeführt und automatisch beim Zuziehen arretiert wird. Zum Verringern der Öffnungsweite nach dem Hindurchführen der zu arretierenden Leitungen durch das Schlaufenelement ist es somit lediglich nötig, das freie Ende des Kabelbinders durch die Öffnung des Haltekopfs hindurch zu ziehen, bis das Schlaufenelement die gewünschte Öffnungsweite aufweist.

Das Halteelement ist vorzugsweise derart ausgebildet, dass es in eine Öffnung des Rahmenrohres insbesondere von außen einsteckbar ist. Bevorzugt weist das Halteelement ein Aufnahmeelement zur Aufnahme des Haltekopfs des Schlaufenelements auf. Hierdurch ist eine definierte Lage des Haltekopfs und somit auch des Endes des Bandelements des Schlaufenelements definiert. Hierdurch ist es zur Montage auf einfache Art und Weise möglich, das Ende des Bandelements zu greifen und durch die Öffnung des Haltekopfes hindurch zu ziehen. Insbesondere ist das Aufnahmeelement derart ausgebildet, dass die Öffnung des Haltekopfs gut zugänglich ist und durch das Aufnahmeelement kein Behindern beim Zuziehen des Bandelements erfolgt. Bei einem beispielsweise quaderförmigen Haltekopf weist das Aufnahmeelement einen vorzugsweise V-förmigen Querschnitt auf, so dass der Haltekopf bei gleichzeitig gut zugänglicher Öffnung in einer definierten Lage eingelegt werden kann.

Zum sicheren Anordnen des Halteelements in beziehungsweise an einem Fahrradrahmenrohr weist das Halteelement ein Klemmelement auf. Hierbei handelt es sich insbesondere um elastische Ansätze, so dass das Halteelement in eine Öffnung am Fahrradrahmenrohr eingedrückt und hierin klemmend fixiert wird. Beispielsweise weist das Klemmelement zwei ringsegmentförmige elastische, insbesondere einander gegenüberliegende Klemmteile auf. Es muss insbesondere berücksichtigt werden, dass nach dem Fixieren der Leitungen innerhalb des Fahrradrahmenrohrs auch ein Halten des Halteelements sichergestellt ist und insofern ein Herausrutschen nicht mehr erfolgen kann.

In einer erfindungsgemäßen Ausgestaltung des leitungs-Fixierelements weist das Halteelement ein in die Öffnung des Schlaufenelements ragendes Anlageelement auf. Dies dient zur Anlage der mindestens einen Leitung bei geschlossenem Schlaufenelement, das heißt wenn sich das Schlaufenelement in Fixierposition beziehungsweise der zugezogenen Position befindet. Das Anlageelement hält die Leitung hierbei vorzugsweise in einem geringen Abstand zur Innenseite des Fahrradrahmenrohrs insbesondere auch um ein Beschädigen der Leitung zu vermeiden. Hierzu kann das Anlageelement in bevorzugter Weiterbildung eine konkave Anlagefläche aufweisen, so dass insbesondere, wenn nur eine einzige Leitung fixiert wird, für diese eine klar definierte Anlagefläche vorgesehen ist.

Ferner betrifft die Erfindung ein Fahrradrahmenrohr mit einer Eintrittsöffnung sowie einer Austrittsöffnung. Durch diese kann jeweils eine Leitung in das Fahrradrahmenrohr ein- beziehungsweise ausgeführt werden. Des Weiteren ist es möglich durch die entsprechenden Öffnungen mehrere Leitungen ein- bzw. auszuführen und/oder mehrere Eintritts- und/oder Austrittsöffnungen vorzusehen. Ferner ist erfindungsgemäß mit dem Fahrradrahmenrohr ein Leitungsfixierelement wie vorstehend beschrieben, insbesondere in den bevorzugten Weiterbildungen, vorgesehen.

Das Fahrradrahmenrohr weist eine Aufnahmeöffnung zur Aufnahme des Halteelements des Leitungs-Fixierelements auf. In dieser Aufnahmeöffnung wird das Halteelement vorzugsweise klemmend gehalten.

Erfindungsgemäß weist das Halteelement ein Aufnahmeelement auf, in dem der Haltekopf des Schlaufenelements angeordnet ist.

In der mindestens einen Eintrittsöffnung sowie vorzugsweise auch in der mindestens einen Austrittsöffnung des Fahrradrahmenrohrs sind ferner vorzugsweise Halteteile angeordnet. Diese dienen ebenfalls dazu, ein selbstständiges Verschieben der Leitungen zu vermeiden. Dies kann durch Vorsehen von Halteteilen geschehen, die eine gewisse Elastizität aufweisen und eine entsprechende Reibung auf die Außenseite der Leitung ausüben, so dass ein Verschieben nur mit einer gewissen Kraft möglich ist. Vorzugsweise ist eine Eintrittsöffnung und eine korrespondierende Austrittsöffnung, das heißt eine Austrittsöffnung, durch die die durch die Eintrittsöffnung eintretende Leitung wieder aus dem Rahmenrohr austritt diagonal zueinander angeordnet.

Das Leitungs-Fixierelement ist vorzugsweise im Wesentlichen im mittleren Bereich zwischen Eintritts- und Austrittsöffnung angeordnet. Beim Vorsehen des Leitungs-Fixierelements im Unterrohr eines Fahrradrahmens ist es besonders bevorzugt, dass die Aufnahmeöffnung für das Halteelement des Leitung-Fixierelements im Bereich des Flaschenhalters vorgesehen ist. Vorzugsweise ist die Aufnahmeöffnung zwischen den beiden Fixierelementen des Flaschenhalters angeordnet, so dass die Aufnahmeöffnung bei montiertem Flaschenhalter verdeckt ist.

Generell ist es bevorzugt, dass durch das Schlaufenelement insbesondere Hydraulikleitungen, gegebenenfalls auch elektrische Leitungen geführt und entsprechend fixiert sind. Bowdenzüge sind vorzugsweise außerhalb des Schlaufenelements angeordnet und verlaufen gegebenenfalls gekreuzt wie in EP 2 159 149 beschrieben. Des Weiteren ist es bevorzugt, dass bei der Herstellung der Rahmen innerhalb der Rahmenrohre Liner, das heißt Kunststoffröhrchen mit einem Durchmesser von ca. 2,5mm eingesetzt werden. Die Liner dienen zur Montagehilfe, indem die entsprechenden Leitungen bei der Montage in die Liner eingeführt werden und somit ein vorgeschriebener Pfad sichergestellt ist. Die Liner sind in bevorzugter Ausführungsform bereits vor dem Einführen der Leitungen durch das Schlaufenelement hindurch geführt.

Ferner betrifft die Erfindung ein Verfahren zur Anordnung und Fixierung mindestens einer Leitung in einem Fahrradrahmenrohr, wobei das Fahrradrahmenrohr mindestens eine Eintrittsöffnung für eine oder mehrere Leitungen und mindestens eine Austrittsöffnung für eine oder mehrere Leitungen aufweist. Die Anordnung und Fixierung erfolgt mit Hilfe des erfindungsgemäßen Leitungs-Fixierelements wie vorstehend beschrieben. Gemäß des erfindungsgemäßen Verfahrens erfolgt zunächst ein Einführen der mindestens einen Leitung durch die mindestens eine Eintrittsöffnung im Fahrradrahmenrohr. Die mindestens eine Leitung wird sodann durch die Öffnung des Schlaufenelements hindurchgeführt und anschließend durch die Austrittsöffnung wieder aus dem Fahrradrahmenrohr ausgeführt. Erfindungsgemäß erfolgt sodann in einem nächsten Schritt ein Verringern der Öffnungsweite des Schlaufenelements. Durch ein entsprechendes Zuziehen des Schlaufenelements wird dieses in die Fixierposition gebracht. Dies erfolgt wie vorstehend bereits in Zusammenhang mit dem Leitungs-Fixierelement beschrieben vorzugsweise derart, dass ein freies Ende eines Bandelements durch eine Öffnung eines Haltekopfes des Schlaufenelements hindurch geführt wird. Hierbei ist es wiederum besonders bevorzugt, dass das Fixieren des Bandelements insbesondere automatisch durch entsprechend vorgesehene Rastelemente erfolgt, wobei das Schlaufenelement vorzugsweise als Kabelbinder ausgebildet ist.

Zur vereinfachten Montage ist es des Weiteren bevorzugt, dass entsprechende Liner bereits vor dem Einführen der mindestens einen Leitung in dem Rahmenrohr angeordnet und auch durch das Schlaufenelement hindurchgeführt sind.

Das erfindungsgemäße Verfahren ist wie vorstehend anhand des Leitungs-Fixierelements beschrieben vorteilhaft weitergebildet.

Das erfindungsgemäße Leitungs-Fixierelement kann selbstverständlich nicht nur an dem Unter- oder Oberrohr eines Fahrradrahmens, sondern auch an anderen Rohrelementen eingesetzt werden. Insbesondere können beispielsweise auch mehrere Hydraulikleitungen von einem Leitungs-Fixierelement fixiert werden. Dies ist insbesondere bei Mountain-Bikes von Interesse. Selbstverständlich können auch mehrere Leitungs-Fixierelemente in einem Rohr eines Fahrradrahmens angeordnet sein.

Ein wesentlicher Vorteil der Erfindung besteht darin, dass das Fixierelement auf sehr einfache Weise und kostengünstig von außen montiert werden kann. Hierzu muss lediglich eine entsprechende Öffnung von beispielsweise etwa 10 mm im Rahmenrohr vorgesehen sein. Hierdurch ist es beispielsweise auch möglich, nachträglich Fixierelemente vorzusehen.

Nachfolgend wird die Erfindung anhand einer bevorzugten Ausführungsform unter Bezugnahme auf die anliegenden Zeichnungen näher erläutert.

Es zeigen:
- Fig. 1: eine schematische, perspektivische Ansicht eines Leitungs-Fixierelements,
- Fig. 2: eine schematische Seitenansicht des Halteelements des Leitungs-Fixierelements,
- Fig. 3: eine schematische Schnittansicht entlang der Linie III-III in Fig. 2,
- Fig. 4: eine schematische Darstellung eines in einem Fahrradrahmenrohr angeordneten Leitungs-Fixierelements, wobei das Fahrradrahmenrohr zur Verdeutlichung transparent dargestellt ist und
- Fig. 5: das in Fig. 4 dargestellte Fahrradrahmenrohr bei geschlossenem Leitungs-Fixierelement.

Das erfindungsgemäße Leitungs-Fixierelement weist ein Schlaufenelement 10 auf. Dieses bildet eine Öffnungsweite 12 aus, wobei durch die Öffnung 12 die zu fixierenden Leitungen geführt werden. Das Schlaufenelement 10 weist einen Haltekopf 14 auf, der entsprechend einem Haltekopf eines Kabelbinders in bevorzugter Ausführungsform ausgebildet ist. Der Haltekopf 14 weist eine Öffnung 16 auf, durch die ein Bandelement 18 des Schlaufenelements 10 hindurchgeführt ist. Innerhalb der Öffnung 16 sind in bevorzugter Ausführungsform entsprechend einem Kabelbinder Rastelemente vorgesehen, die mit an einer Außenseite 20 des Bandelements 18 vorgesehenen Rastelementen zusammenwirken. Durch Ziehen an dem freien Ende des Bandelements 18 erfolgt somit ein Verringern der Öffnungsweite 12 und gleichzeitig ein Arretieren in der entsprechenden Stellung wie bei Kabelbindern üblich.

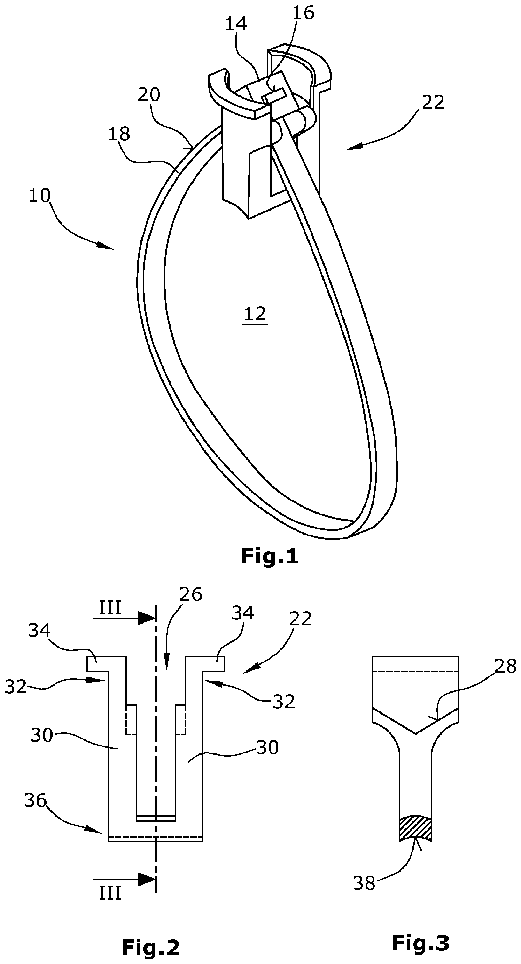

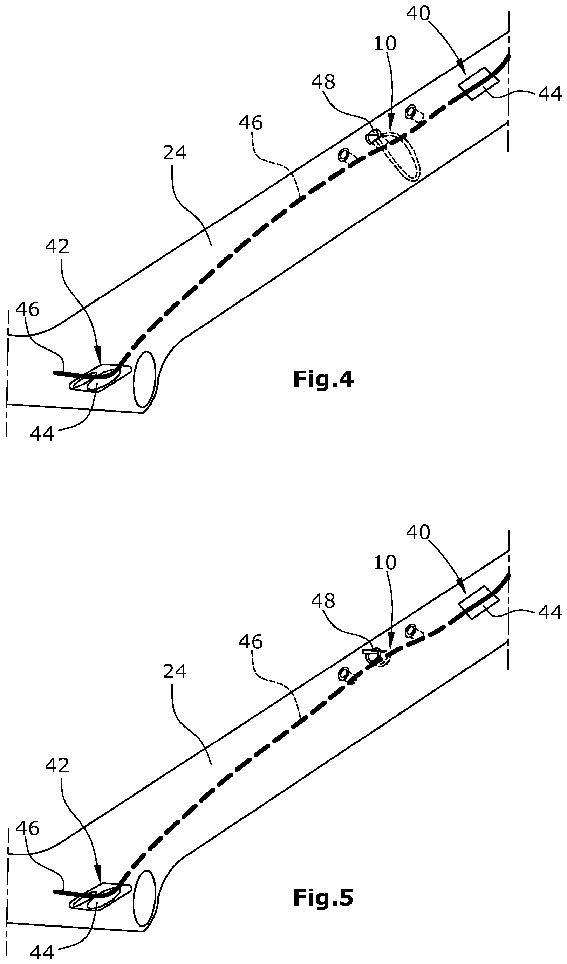

Ferner weist das Leitungs-Fixierelement ein Halteelement 22 auf. Dies dient einerseits zum Halten des Schlaufenelements 10 und andererseits zur Befestigung an einem Fahrradrahmenrohr 24 (Fign. 4 und 5). Das Halteelement 22 weist ein Aufnahmeelement beziehungsweise einen Aufnahmebereich 26 (Fig. 2) auf. In diesem ist der Haltekopf 14 angeordnet. Bei einem insbesondere quaderförmigen Haltekopf 14 weist das Aufnahmeelement eine in Seitenansicht V-förmige Anlagefläche 28 (Fig. 3) auf.

Das Halteelement 22 weist im dargestellten Ausführungsbeispiel eine in Seitenansicht U-förmige bzw. gabelförmige Ausgestaltung auf (Fig. 2). Die beiden Arme bzw. Seitenteile 30 des Halteelements 20 sind hierdurch elastisch verformbar, so dass ein einfaches Einstecken des Halteelements 20 in eine Öffnung in einem Rahmenrohr 24 möglich ist. Hierdurch entsteht ein klemmendes Halten des Halteelements 22 in der Aufnahmeöffnung 48 des Rahmenrohrs, wobei die Bereiche 32 als Klemmelemente dienen. Ferner weist das Halteelement 22 zwei nach außen ragende Ansätze 34 auf, durch die vermieden ist, dass das Halteelement zu weit in das Rahmenelement eingesteckt werden kann. Ferner ist hierdurch eine klar definierte Position gewährleistet.

Das Halteelement 22 weist ferner ein in montiertem Zustand in das Rahmenrohr und die Öffnungsweite 12 der Schlinge hineinragendes Anlageelement 36 auf. An einer Unterseite 38 des Anlageelements 36 liegt in fixiertem Zustand die mindestens eine Leitung an. Hierzu ist die Anlagefläche 38 vorzugsweise konkav ausgebildet.

Das Fahrradrahmenrohr 24, bei dem es sich beispielsweise um ein Unterrohr handelt, wobei es sich jedoch auch um ein anderes Rahmenrohr handeln kann, weist eine Eintrittsöffnung 40 sowie eine Austrittsöffnung 42 auf. In der Eintrittsöffnung 40 sowie in der Austrittsöffnung 42 sind Halteteile 44 angeordnet, die insbesondere durch Reibung ein Halten der im dargestellten Ausführungsbeispiel einen Leitung 46 gewährleisten. Die Leitung 46 ist durch das Schlaufenelement hindurchgeführt. Hierzu ist es möglich, dass vor dem Hindurchführen der Leitung 46 selbst bereits ein entsprechender Liner vorgesehen ist, der ebenfalls durch das Schlaufenelement 10 hindurchgeführt ist, so dass zur Montage die Leitung in den Liner eingeführt wird.

Zur Fixierung der Leitung 46 erfolgt ein Schließen des Schlaufenelements. Hierzu wird das freie Ende des Bandelements 18 im dargestellten Ausführungsbeispiel durch die Öffnung 16 des Haltekopfs 14 hindurch gezogen und durch die hier und an der Außenseite 22 des Bandelements angeordneten Rastelemente fixiert. Hierbei wird das Schlaufenelement 10 vorzugsweise vollständig zugezogen, so dass die Leitung 46 wie in Fig. 5 dargestellt, fixiert ist.

## Patentansprüche

1. Leitungs-Fixierelement für in Fahrradrahmenrohren angeordnete Leitungen, mit
einem in seiner Öffnungsweite (12) veränderbaren Schlaufenelement (10) und
einem das Schlaufenelement (10) haltenden Halteelement (22), das an einem Fahrradrohr (24) befestigbar ist,
wobei das Halteelement (22) ein in die Öffnung (12) des Schlaufenelements (10) ragendes Anlageelement (36) aufweist, an dem die mindestens eine Leitung (46) bei geschlossenem Schlaufenelement (10) anliegt
**dadurch gekennzeichnet,**
**dass** das Halteelement (22) ein Klemmelement (32) zum klemmenden Halten am und/oder im Fahrradrahmenrohr (24) aufweist.

2. Leitungs-Fixierelement nach Anspruch 1, **dadurch gekennzeichnet, dass** das Schlaufenelement (10) in einer Fixierposition, in der die Leitung (46) fixiert ist, arretierbar ist.

3. Leitungs-Fixierelement nach Anspruch 1 oder 2, **dadurch gekennzeichnet, dass** das Schlaufenelement (10) einen Haltekopf (14) mit einer Öffnung (16) aufweist, durch die ein Bandelement (18) das Schlaufenelement (10) geführt ist.

4. Leitungs-Fixierelement nach Anspruch 2 oder 3, **dadurch gekennzeichnet, dass** zur Arretierung ein Rastelement insbesondere am Haltekopf (14) vorgesehen ist, das vorzugsweise mit einem am Bandelement (18) vorgesehenen Rastelement zusammenwirkt.

5. Leitungs-Fixierelement nach einem der Ansprüche 1 bis 4, **dadurch gekennzeichnet, dass** das Schlaufenelement (10) entsprechend eines Kabelbinders ausgebildet ist.

6. Leitungs-Fixierelement nach einem der Ansprüche 3 bis 5, **dadurch gekennzeichnet, dass** das Halteelement (22) ein Aufnahmeelement (26) zur Aufnahme des Haltekopfs (14) des Schlaufenelements (10) aufweist.

7. Fahrradrahmenrohr, mit
einer Eintrittsöffnung (40) für mindestens eine Leitung (46),
eine Austrittsöffnung (42) für die mindestens eine Leitung (46),
einem Leitungs-Fixierelement mit einem in seiner Öffnungsweite (12) veränderbaren Schlaufenelement (10), wobei das Schlaufenelement (10) einen Haltekopf (14) mit einer Öffnung (16) aufweist, durch die ein Bandelement (18) das Schlaufenelement (10) geführt ist, und
einem das Schlaufenelement (10) haltenden Halteelement (22), das an einem Fahrradrohr (24) befestigbar ist, wobei das Halteelement (22) ein Aufnahmeelement (26) aufweist, in dem der Haltekopf (14) des Schlaufenelements (10) angeordnet ist,
wobei das Fahrradrahmenrohr eine Aufnahmeöffnung (48) zur Aufnahme des Halteelements (22) aufweist.

8. Fahrradrahmenrohr nach Anspruch 7, **gekennzeichnet durch** in der Eintrittsöffnung (40) und/oder der Austrittsöffnung (42) angeordnete Halteteile (44).

9. Fahrradrahmenrohr nach Anspruch 7 oder 8, **gekennzeichnet durch** ein Leitungs-Fixierelement nach einem der Ansprüche 1 bis 6.

10. Verfahren zur Anordnung und Fixierung mindestens einer Leitung (46) in einem Fahrradrahmenrohr (24) mit einer Eintrittsöffnung (40) für die mindestens eine Leitung (46) und einer Austrittsöffnung (42) für die mindestens eine Leitung (46) mittels eines Leitungs-Fixierelements mit einem in seiner Öffnungsweite (12) veränderbaren Schlaufenelement (10) und
einem das Schlaufenelement (10) haltenden Halteelement (22), das an einem Fahrradrohr (24) befestigbar ist, mit den Schritten:
Befestigen des Leitungs-Fixierelements an dem Fahrradrahmenrohr (24),
Einführen der mindestens einen Leitung (46) durch die Eintrittsöffnung (40),
Hindurchführen der mindestens einen Leitung (46) durch die Öffnung (12) des Schlaufenelements (10),
Ausführen der mindestens einen Leitung (46) durch die Ausführöffnung (42) und
Verringern der Öffnungsweite (12) des Schlaufenelements (10).

11. Verfahren nach Anspruch 10, bei welchem das Verringern der Öffnungsweite (12) durch Hindurchziehen eines freien Endes des Bandelements (18) durch eine Öffnung (16) des Haltekopfs (14) erfolgt.

12. Verfahren nach Anspruch 10 oder 11, bei welchem das Fixieren des Bandelements (18) insbesondere durch Rastelemente, die vorzugsweise am Haltekopf (14) sowie am Bandelement (18) angeordnet sind, in der Fixierposition erfolgt.

13. Verfahren nach einem der Ansprüche 10 bis 12, bei welchem ein
Leitungs-Fixierelement nach einem der Ansprüche 1 bis 6 verwendet wird.

## Claims

1. Line fixing element for lines arranged in bicycle frame tubes, comprising
a loop element (10) having an adjustable opening width (12), and
a holding element (22) holding the loop element (10), the holding element being adapted to be fastened to a bicycle tube (24),
wherein the holding element (22) has a bearing element (36) protruding into the opening (12) of the loop element (10) for the at least one line (46) to bear thereon in the closed state of the loop element (10),
**characterized in that**
the holding element (22) comprises a clamping element (32) to clampingly hold on and/or in the bicycle frame tube (24).

2. Line fixing element of claim 1, **characterized in that** the loop element (10) is adapted to be locked in a fixing position in which the line (46) is fixed.

3. Line fixing element of claim 1 or 2, **characterized in that** the loop element (10) has a holding head (14) with an opening (16) through which a band element (18) of the loop element (10) is passed.

4. Line fixing element of claim 2 or 3, **characterized In that**, for locking, a latch element is provided in particular at the holding head (14), the latch element preferably cooperating with a latch element provided on the band element (18).

5. Line fixing element of one of claims 1 to 4, **characterized in that** the loop element (10) is designed In a manner similar to a cable strap.

6. Line fixing element of one of claims 3 to 5, **characterized in that** the holding element (22) comprises a receiving element (26) for receiving the holding head (14) of the loop element (10).

7. Bicycle frame tube comprising
an entry opening (40) for at least one line (46), and
an exit opening (42) for the at least one line (46),
a line fixing element with a loop element (10) having an adjustable opening width (12), wherein the loop element (10) comprises holding head (14) with an opening (16) through which a band element (18) of the loop element (10) is passed,
a holding element holding the loop element (22), which holding element is adapted to be fastened to a bicycle tube (24), wherein the holding element (22) comprises a receiving element (26) for receiving the holding head (14) of the loop element (10),
wherein the bicycle frame tube has a receiving opening (48) for receiving the holding element (22).

8. Bicycle frame tube of claim 7, **characterized by** holding members (44) arranged in the entry opening (40) and/or the exit opening (42).

9. Bicycle frame tube of claim 7 or 8, **characterized by** a line fixing element of one of claims 1 to 6.

10. Method for arranging and fixing at least one line (46) in a bicycle frame tube (24) using a line fixing element with a loop element (10) having an adjustable opening width (12), the tube having an entry opening (40) for said at
least one line (46) and an exit opening (42) for said at least one line (46), and
at least one holding element holding the loop element (22), which holding element is adapted to be fastened to a bicycle tube (24),
the method comprising the following steps:
fastening the line fixing element to the bicycle frame tube (24),
inserting said at least one line (46) through said entry opening (40),
passing said at least one line (46) through the opening (12) of the loop element (10),
leading out the at least one line (46) through exit opening (42), and
reducing the opening width (12) of the loop element (10).

11. Method of claim 10, wherein reducing the opening width (12) is effected by pulling a free end of said band element (18) through an opening (16) of the holding head (14).

12. Method of claim 10 or 11, wherein fixing said band element (18) in the fixing position is effected in particular by means of latch elements preferably arranged at the holding head (14) and at the band element (18).

13. Method of one of claims 10 to 12, wherein a line fixing element of one of claims 1 to 6 is used.

## Revendications

1. Élément de blocage de câble pour des câbles agencés dans des tubes de cadre de bicyclette, doté
d'un élément de boucle (10) variable dans sa largeur d'ouverture (12) et
d'un élément de maintien (22) maintenant l'élément de boucle (10) et pouvant être fixé à un tube de bicyclette (24),
dans lequel l'élément de maintien (22) comporte un élément d'appui (36) faisant saillie dans l'ouverture (12) de l'élément de boucle (10), sur lequel s'appuie l'au moins un câble (46) lorsque l'élément de boucle (10) est fermé
**caractérisé en ce que**
l'élément de maintien (22) comporte un élément de serrage (32) pour le maintien par serrage sur et/ou dans le tube de cadre de bicyclette (24).

2. Élément de blocage de câble selon la revendication 1, **caractérisé en ce que** l'élément de boucle (10) est verrouillable dans une position de blocage, dans laquelle le câble (46) est bloqué.

3. Élément de blocage de câble selon la revendication 1 ou 2, **caractérisé en ce que** l'élément de boucle (10) comporte une tête de maintien (14) dotée d'une ouverture (16), au travers de laquelle est guidé un élément de bande (18) de l'élément de boucle (10).

4. Élément de blocage de câble selon la revendication 2 ou 3, **caractérisé en ce qu'**à fins de verrouillage un élément d'encliquetage est prévu en particulier sur la tête de maintien (14), coopérant avec un élément d'encliquetage prévu de préférence sur l'élément de bande (18).

5. Élément de blocage de câble selon l'une des revendications 1 à 4, **caractérisé en ce que** l'élément de boucle (10) est conçu conformément à une attache de câble.

6. Élément de blocage de câble selon l'une des revendications 3 à 5, **caractérisé en ce que** l'élément de maintien (22) comporte un élément d'accueil (26) pour accueillir la tête de maintien (14) de l'élément de boucle (10).

7. Tube de cadre de bicyclette, doté
d'une ouverture d'entrée (40) pour au moins un câble (46),
d'une ouverture de sortie (42) pour l'au moins un câble (46),
d'un élément de blocage de câble doté d'un élément de boucle (10) variable dans sa largeur d'ouverture (12), dans lequel l'élément de boucle (10) comporte une tête de maintien (14) dotée d'une ouverture (16), au travers de laquelle est guidé un élément de bande (18) de l'élément de boucle (10), et
d'un élément de maintien (22) maintenant l'élément de boucle (10) et pouvant être fixé à un tube de bicyclette (24), dans lequel l'élément de maintien (22) comporte un élément de réception (26), à l'intérieur duquel est agencée la tête de maintien (14) de l'élément de boucle (10),
dans lequel le tube de cadre de bicyclette comporte une ouverture de réception (48) destinée à l'accueil de l'élément de maintien (22).

8. Tube de cadre de bicyclette selon la revendication 7, **caractérisé par** des pièces de maintien (44) agencées dans l'ouverture d'entrée (40) et/ou l'ouverture de sortie (42).

9. Tube de cadre de bicyclette selon la revendication 7 ou 8, **caractérisé par** un élément de blocage de câble selon l'une des revendications 1 à 6.

10. Procédé d'agencement et de blocage d'au moins un câble (46) dans un tube de cadre de bicyclette (24) doté d'une ouverture d'entrée (40) pour l'au moins un câble (46) et d'une ouverture de sortie (42) pour l'au moins un câble (46), au moyen d'un élément de blocage de câble doté d'un élément de boucle (10) variable dans sa largeur d'ouverture (12) et
d'un élément de maintien (22) maintenant l'élément de boucle (10), pouvant être fixé à un tube de bicyclette (24), avec les étapes de:
fixation de l'élément de blocage de câble au tube de cadre de bicyclette (24),
introduction de l'au moins un câble (46) au travers de l'ouverture d'entrée (40),
guidage de l'au moins un câble (46) au travers de l'ouverture (12) de l'élément de boucle (10),
sortie de l'au moins un câble (46) au travers de l'ouverture de sortie (42) et
réduction de la largeur d'ouverture (12) de l'élément de boucle (10).

11. Procédé selon la revendication 10, lors duquel la réduction de la largeur d'ouverture (12) s'effectue en tirant une extrémité libre de l'élément de bande (18) au travers d'une ouverture (16) de la tête de maintien (14).

12. Procédé selon la revendication 10 ou 11, lors duquel le blocage de l'élément de bande (18) dans la position de blocage s'effectue en particulier par des éléments d'encliquetage, qui sont de préférence agencés sur la tête de maintien (14) ainsi que sur l'élément de bande (18).

13. Procédé selon l'une des revendications 10 à 12, lors duquel un élément de blocage de câble selon l'une des revendications 1 à 6 est utilisé.
